# EUROPEAN PATENT SPECIFICATION

(11) **EP 1 276 115 B1**
(45) Date of publication and mention of the grant of the patent: **20.01.2010**
(21) Application number: 02253512.4
(22) Date of filing: 20.05.2002
(51) Int. Cl.: G11B 33/04

(54) **Holder for compact discs**
Behälter für kompakte Platten
Boîtier pour disques compacts

(30) Priority: 18.05.2001 GB 0112255
(43) Date of publication of application: 15.01.2003
(73) Proprietor: POZZOLI S.p.A., 20065 Inzago (Milano) (IT)
(72) Inventor: Holbrough, Sidney, Swansea, SA3 4UR (GB)
(74) Representative: Alagem Modiano, Lara S.

(56) References cited:
- GB-A- 2 304 690
- US-A- 5 782 348

## Description

This invention relates to a holder for holding optical data storage discs ("compact discs"). In particular the invention relates to a compact disc storage case for two or more compact discs.

Compact discs (CDs) are used as data storage devices in a wide range of applications. Compact discs are sold carrying pre-recorded music, computer games and films as part of a lucrative home entertainment market. Computer software is frequently sold recorded on compact discs. Recordable and re-recordable compact discs are also commonly employed for storage of computer data at home and in the workplace. It will be understood that the term "compact discs" is used to describe all optically readable data storage discs including, but not limited to, 120mm diameter, single data-faced discs of the type frequently used to store pre-recorded music, computer software, computer data, recordable and re-recordable discs and digital versatile discs (DVDs) used for the storage of video data.

Conventions regarding the packaging of such compact discs vary between different applications in which the discs are to be used. There are for instance different industry sized cases for music compact discs and DVDs. Among the most well-known types of case are so called "jewel cases", normally used in the sale of music CDs and computer games and software CDs. Jewel cases generally have dimensions approximately 140mm by 125mm by 10mm when closed. The industry adopted standard size of DVD case on the other hand is approximately 136mm wide, 190mm long and 13mm deep when closed (notwithstanding that the discs are of the same size as a conventional music CD). The establishment of conventions for the sizing of compact disc cases ensures that the cases may be interchangeably stored in point of sale displays or domestic storage units.

In the majority of storage cases the compact disc is retained in position by releasable engagement with a raised hub. Such hubs (also referred to as rosettes or bosses) typically comprise resilient tines arranged to form a generally circular structure having a diameter slightly greater than that of the central aperture of the compact disc. When the aperture of a disc is aligned over the boss and downward pressure applied the tines are urged together to assume a diameter capable of passing through the aperture.

The resilience of the tines then induces them to resume their original conformation, thereby holding the compact disc in place. To effect removal of the disc a downward pressure is applied to the tines, causing their reversion to the reduced diameter configuration, while an upward pressure is applied to the compact disc.

In many situations it is desirable to provide two or more compact discs in a single case. This may be due to the total amount of data required being more than can be stored on a single disc or to increases in value that may be imparted by the provision of other discs (such as packaging of a sound track or similar disc with copies of a film). The prior art contains a number of cases designed to hold two or more compact discs.

US 5,782,348, for instance, discloses a multiple compact disc storage case in which two or more discs may be stored partially overlapping one another on the same side of the case on adjacent hubs. The hubs are spaced apart and one is raised above the other so that the two discs do not contact one another in the region of the overlap. This reduces the risk of scratching the discs which might otherwise render data irretrievable.

GB 2 304 690 discloses a box for storing one pair of compact discs comprising a housing and two projections which serve as support for the discs. Each compact disc is positioned so that it is spaced apart from and partially overlaps with the other compact disc. The storage container does not provide specially designed support elements.

EP 0 676 763 relates to a container for a plurality of discs with a first swing-out frame and a second swing-out frame. The container is designed so that the each disc can be accommodated on one of said swing-out frame and the discs result partially overlapped.

Unfortunately such an arrangement cannot be adopted within the industry accepted standard case sizes mentioned above. As a result other forms of multiple compact disc storage cases are more commonly used. These include designs in which both halves of a case are provided with hubs, designs effectively comprising two jewel cases placed back to back, designs based around hinged inlays bearing hubs on both sides and designs in which a single hub engages two vertically stacked discs.

Such known designs of compact disc case have a number of failings. Some are relatively complex, and hence costly, to manufacture. Others are difficult to open and liable to suffer damage through use. The vertically stacked case mentioned is relatively simple but has the disadvantage that it is not immediately obvious when more than one disc is present, and information displayed on the front of all but the top disc is completely hidden.

compact disc cases having hubs on both sides of the case suffer from a further disadvantage in that printed material cannot be accommodated inside the cover in a conventional way.

It is an object of the present invention to provide a compact disc holder which obviates or mitigates the above mentioned disadvantages. In particular it is an object of the present invention to provide a storage case for storing two or more discs within the industry accepted standard DVD box dimensions.

According to a first aspect of the present invention there is provided a holder for at least two compact discs according to claim 1.

The invention allows the two discs to be mounted very close together without interfering with operation of the disc engaging formations. For instance, with the present invention two DVDs can be mounted to the same side of a conventionally sized DVD case.

In preferred embodiments said support structure is discontinuous around the second hub, said discontinuity providing said region of reduced radial extent. For instance the support structure may comprise a land which extends partially around the second hub.

The hubs may so close together that the edge of one disc lies adjacent the periphery of the central aperture of the other disc and vice versa. Each hub may even be provided with a cut-away portion so that the edge of each disc can extend beyond the periphery of the central aperture of the other disc.

Additional preferred and advantageous features of the invention will be apparent from the following description.

A specific embodiment of the present invention will now be described, by way of example only, with reference to the accompanying drawings, in which:
Figure 1 is a plan view of an open DVD case according to the present invention;
Figure 2 shows the DVD case of Figure 1 with compact discs (DVDs) in position;
Figure 3 is a schematic cross-section through part of the case of Figure 1;
Figure 4 is a schematic perspective view of one example of a disc supporting hub capable of use in the present invention; and
Figure 5 is a schematic perspective view of a modified disc supporting hub capable of use in the present invention..

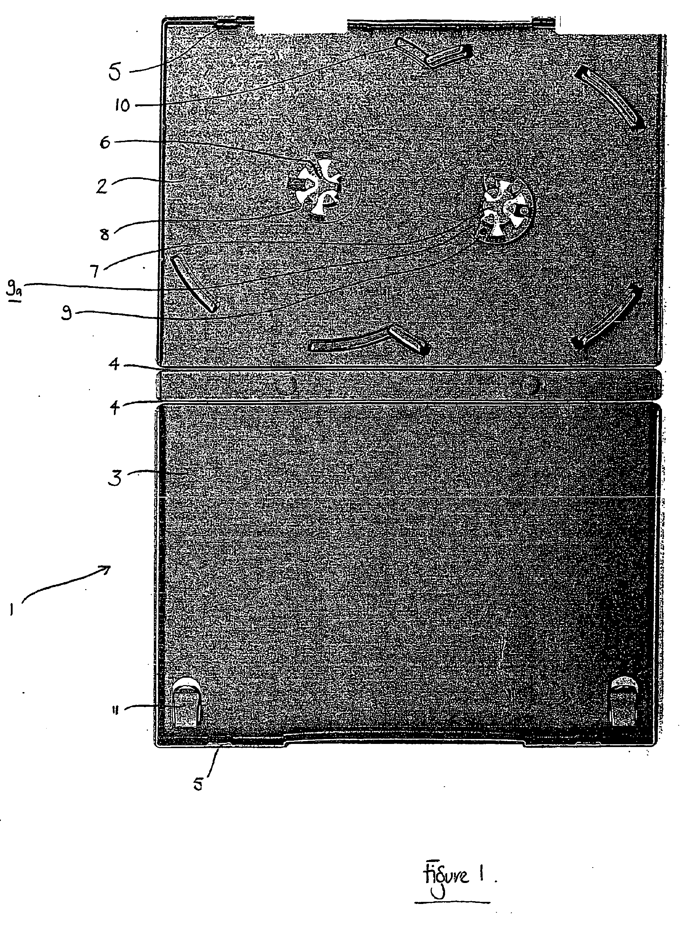

Referring first to figure 1 the illustrated case (generally indicated as 1) comprises a base 2 and lid 3, joined by a pair of living hinges 4. When the case 1 is closed lid 3 overlies base 2. Lid 3 and base 2 are provided with conventional interlocking snap fittings 5 able to hold case 1 closed. In this example the case has the industry accepted dimensions of a standard DVD case.

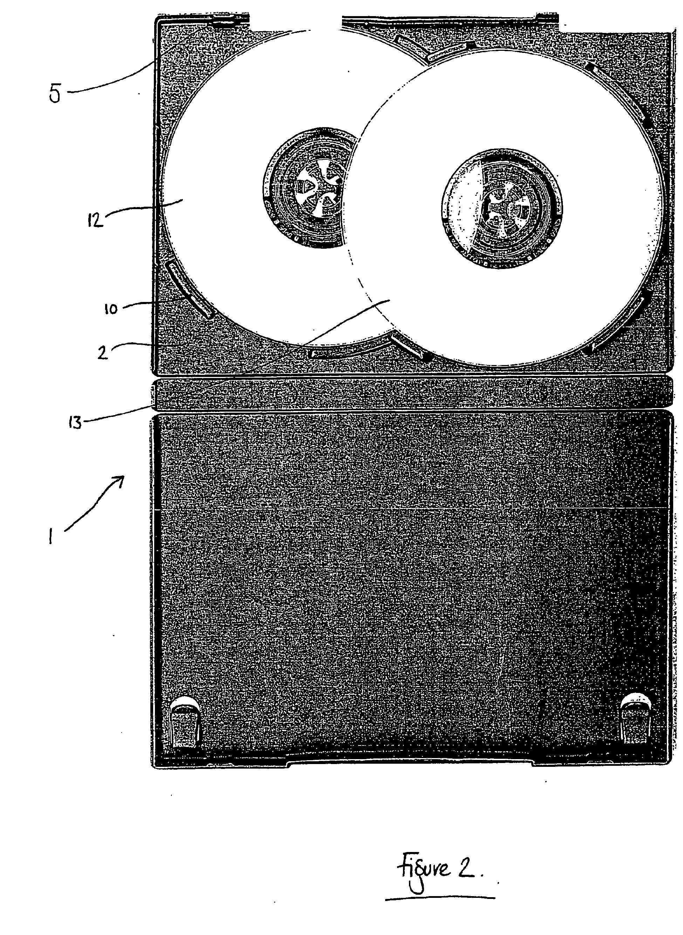

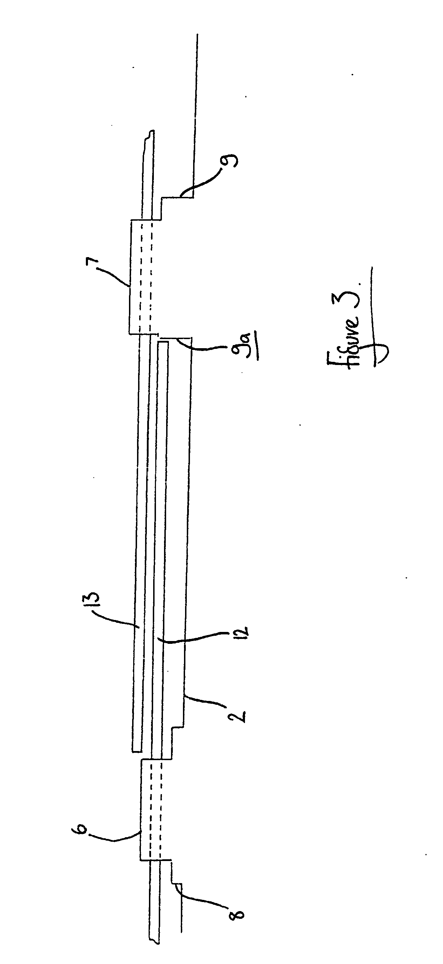

The base 2 of case 1 is provided with first and second disc-engaging hubs 6 and 7, which extend upwardly from bosses 8 and 9 respectively, arranged to support the discs in an overlapping manner. The bosses 8, 9 support a non-data encoding portion of the surface of a held disc to ensure that the data surface of the disc is kept from contact with the surface of base 2. Peripheral support ledges 10 support respective portions of the edges of engaged discs, again to hold them away from the surface of base 2. The boss 9, and associated support ledge 10 are raised above the base 2 to a greater extent than boss 8 and its associated support ledges 10. This ensures that with two discs 12 and 13 in situ (see Figures 2 and 3) the overlapping portions of the discs 12 and 13 do not contact, thereby avoiding damage to the data carrying portions regions of discs 12 and 13.

The lid 3 of case 1 is provided with integrally moulded clips 11 to retain printed material such as information booklets or the like, as is conventional. In accordance with the present invention boss 9 has a "cut-away" configuration in region 9a, when compared with boss 8 which is continuous around hub 6. The hubs 6 and 7 are similarly partially "cut-away". This arrangement allows the two hubs 6 and 7 to be positioned as close as is possible to each other without interfering with their operation. Thus, referring to Figures 2 and 3, it can be seen that the edge of disc 12 extends into the cut-away portion of boss 9 and hub 7 whilst the edge of disc 13, which partially overlaps disc 12, extends into the cut-away portion of hub 6. The discs 12 and 13 are thereby able to overlap each other to a greater extent than is possible in examples of the prior art (such as US 5,782,348) for instance allowing two discs to be mounted on the same side of a conventional DVD case as illustrated. A further adaptation that enables discs 12 and 13 to be overlapped within a reduced area of base 2 can be seen in the off-setting of the two hubs 6 and 7 relative to an imaginary centre line through base 2.

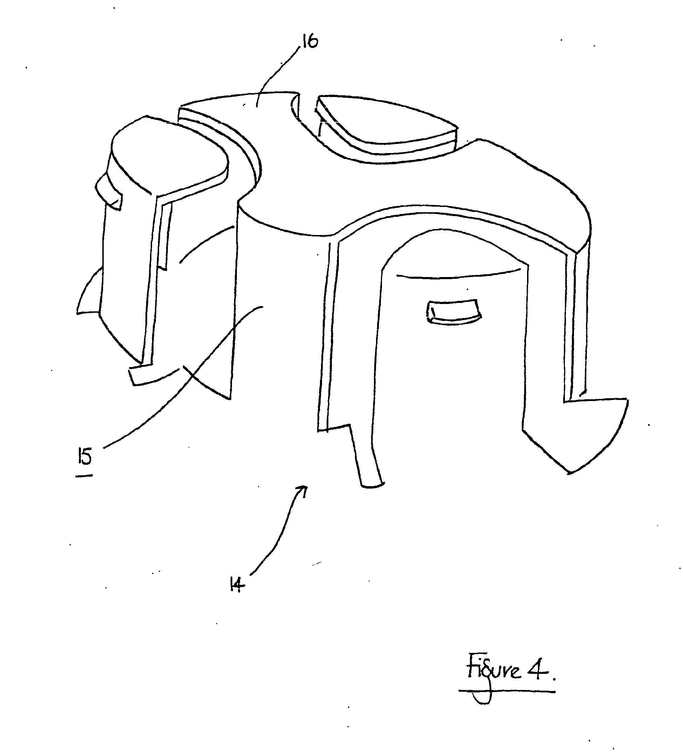

Figure 4 illustrates a hub (indicated generally as 14) that is particularly suited to use in the invention due to the provision of an area 15 in which the central structure 16 is truncated. The alignment of the truncated portion 15 of the hub 14 with the cut-away portion of boss 9 allows the distance between the centres of the two hubs 8 and 9 to be decreased further than is possible through the provision of cut-away bosses alone. It will be appreciated however that other designs of hub may be used.

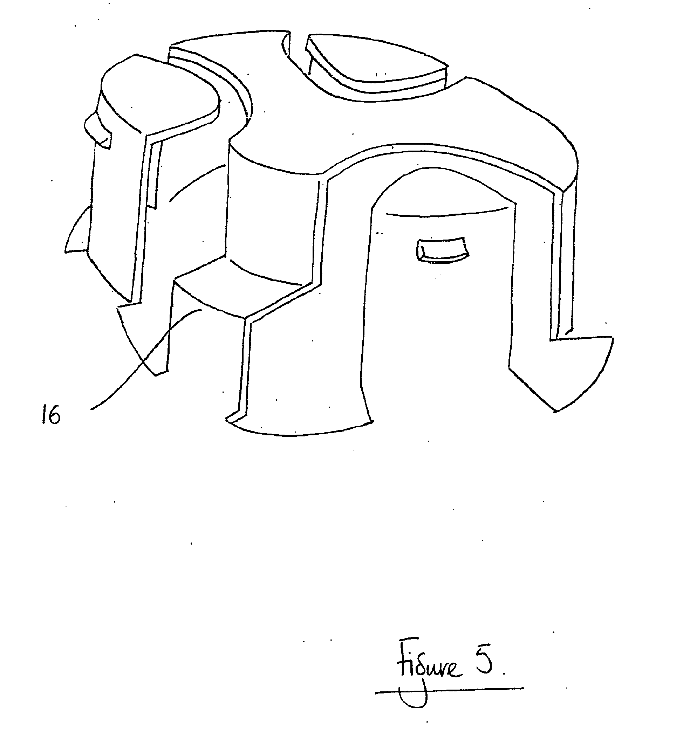

The hub which engages the lower of the two overlapping discs may be provided with a support formation which extends through the aperture in the lower disc to support the peripheral edge of the upper disc to further help prevent the two discs contacting one another. A modification of the hub illustrated in Figure 4 having such a support formation is illustrated in Figure 5. The modified hub further comprises a stepped portion 16 which provides a raised land on which the non-data carrying edge of the upper disc can rest.

It will be appreciated that many modifications may be made to the details of the case described above. For instance, instead of bosses acting as support platforms for compact discs it may be possible to provide a number of discreet support formations located around the respective hub that support the non data-coding portion of the disc. The hubs need not be off-set from one another in embodiments allowing greater separation of the hubs. It may under some circumstances be preferred to provide a compact disc holder that does not entirely enclose the discs (as does a case), but rather leaves at least one surface open.

## Claims

1. A holder for at least two compact discs (12, 13) each having a central aperture surrounded by a central annular non-data carrying region, the holder comprising:
a surface;
first and second spaced apart disc (12, 13) engaging formations extending from said surface to support first and second compact discs (12, 13) respectively in a partially overlapping arrangement;
the first disc engaging formation comprising a first hub (6) which in use is received within the central aperture of the first disc (12);
the second disc engaging formation comprising a second hub (7) which in use is received within the central aperture of the second disc (13), and a support structure adjacent the hub which in use supports the central non-data carrying portion of the second disc away from the surface and above the first disc so that the two discs (12, 13) do not contact one another in the region of their overlap;
**characterized in that** said support structure has a reduced radial extent relative to the centre of the second hub (7) in a region opposing the first hub (6), and the first (6) and second (7) hubs are spaced such that in use the edge of one disc overlaps part of the central non-data carrying region of the other disc, said region of reduced radial extent of said support structure accommodating the proximity of the edge of the first disc (12) to the second hub (7), and **in that** each hub (6, 7) is provided with a cut-away portion so that the edge of each disc (12, 13) can extend beyond the periphery of the central aperture of the other disc (12, 13).

2. The compact disc holder according to claim 1, **characterized in that** said support structure is discontinuous around the second hub (7), said discontinuity providing said region of reduced radial extent.

3. The compact disc holder according to preceding claim 2, **characterized in that** said support structure comprises a land (17) which extends partially around the second hub (7).

4. The compact disc holder according to claim 3, **characterized in that** said land (17) is defined by a boss (9) which supports the second hub (7).

5. The compact disc holder according to any preceding claim, **characterized in that** the hubs (6, 7) are spaced such that the edge of one disc (12, 13) lies adjacent the periphery of the central aperture of the other disc (12, 13) and vice versa.

6. The compact disc holder according to claim 1, **characterized in that** the first hub (6, 14) is provided with a support formation (16) which in use extends through the aperture of the first disc (12) to substantially the same height as said support structure, which in use supports the edge of the second disc (13) above the first disc (12).

7. The compact disc holder according to any preceding claim, **characterized in that** the first hub (6, 14) is surrounded by a land which supports the central non-data carrying portion of the first disc to hold said first disc above said surface.

8. The compact disc holder according to claim 1, **characterized in that** the surface is rectangular having two long sides and two short sides and a long axis extending mid way between said long sides, and wherein one of said first (6) and second (7) hubs is displaced to one side of said axis and the other of said first (6) and second (7) hubs is either located on, or is displaced to the other side of, said axis.

9. The compact disc holder according to any preceding claim, **characterized in that** it further comprises a base (2) and a cover (3) which releasably engages the base (2) to fully enclose said discs (12, 13), said surface being defined by said base (2) or cover (3).

10. The compact disc holder according to claim 9, **characterized in that** said cover (3) is hingedly connected to said base (2).

11. The compact disc holder according to claim 9 or claim 10, **characterized in that** said cover (3) is provided with means for retaining printed material.

12. The compact disc holder according to claim 9 or claim 10, **characterized in that** said cover (3) defines a surface provided with at least one compact disc engaging formation.

13. The compact disc holder according to claim 12, **characterized in that** said surface supports third and fourth compact disc engaging formations corresponding in configuration and spacing to said first and second compact disc engaging formations respectively.

14. The compact disc holder according to any preceding claim, **characterized in that** each compact disc engaging formation is moulded integrally with the base and/or cover.

15. The compact disc holder according to any preceding claim and having the dimensions of a conventional DVD case.

## Patentansprüche

1. Halter für zumindest zwei CDs (12, 13), wobei jede CD eine zentrale Öffnung aufweist, die von einem ringförmigen zentralen Bereich umgeben ist, der keine Daten trägt, wobei der Halter aufweist:
eine Fläche;
eine erste und eine zweite beabstandete CD (12, 13), die mit Formationen in Eingriff gelangen, die sich von der Fläche erstrecken, um die erste bzw, zweite CD (12, 13) in teilweise überlappender Anordnung zu halten;
wobei die erste CD-Eingriffs-Formation eine erste Nabe (6) aufweist, die bei Gebrauch in der zentralen Öffnung der ersten CD (12) aufgenommen ist;
wobei die zweite CD-Eingriffs-Formation eine zweite Nabe (7), die bei Gebrauch in der zentralen Öffnung der zweiten CD (13) aufgenommen ist, und eine Haltestruktur aufweist, die benachbart der Nabe vorliegt und bei Gebrauch einen zentralen Abschnitt der zweiten CD, der keine Daten trägt, von der Fläche weg und über der ersten CD hält, so dass die beiden CDs (12, 13) einander im Bereich ihrer Überlappung nicht berühren;
**dadurch gekennzeichnet, dass** die Haltestruktur in Bezug auf die Mitte der zweiten Nabe (7) in einem der ersten Nabe (6) gegenüberliegenden Bereich eine verringerte radiale Erstreckung aufweist, und dass die erste Nabe (6) und die zweite Nabe (7) derart beabstandet sind, dass der Rand einer CD einen Teil des zentralen Bereichs der anderen CD, der keine Daten trägt, in Gebrauch überlappt, wobei der Bereich der verringerten radialen Erstreckung der Haltestruktur die Umgebung des Randes der ersten CD (12) zur zweiten Nabe (7) aufnimmt, und dass jede Nabe (6, 7) mit einem abgeschnittenen Abschnitt versehen ist, so dass sich der Rand jeder CD (12, 13) über den Umfang der zentralen Öffnung der anderen CD (12, 13) hinaus erstrecken kann.

2. CD-Halter nach Anspruch 1, **dadurch gekennzeichnet, dass** die Haltestruktur um die zweite Nabe (7) herum diskontinuierlich ist, wobei die Diskontinuität den Bereich verringerter radialer Erstreckung vorsieht.

3. CD-Halter nach Anspruch 2, **dadurch gekennzeichnet, dass** die Haltestruktur eine Stegfläche (17) aufweist, die sich teilweise um die zweite Nabe (7) herum erstreckt.

4. CD-Halter nach Anspruch 3, **dadurch gekennzeichnet, dass** die Stegfläche (17) von einen Vorsprung (9) definiert ist, der die zweite Nabe (7) trägt.

5. CD-Halter nach einem beliebigen vorhergehenden Anspruch, **dadurch gekennzeichnet, dass** die Naben (6, 7) derart beabstandet sind, dass der Rand einer CD (12, 13) benachbart dem Umfang der zentralen Öffnung der anderen CD (12, 13) und umgekehrt liegt.

6. CD-Halter nach Anspruch 1, **dadurch gekennzeichnet, dass** die erste Nabe (6, 14) mit einer Stützformation (16) versehen ist, die sich bei Gebrauch durch die Öffnung der ersten CD (12) mit im Wesentlichen der gleichen Höhe wie die Haltestruktur erstreckt, welche bei Gebrauch den Rand der zweiten CD (13) über der ersten CD (12) hält.

7. CD-Halter nach einem beliebigen vorhergehenden Anspruch, **dadurch gekennzeichnet, dass** die erste Nabe (6, 14) von einer Stegfläche umgeben ist, die den zentralen Abschnitt der ersten CD, der keine Daten enthält, trägt, um die erste CD über der Fläche zu halten.

8. CD-Halter nach Anspruch 1, **dadurch gekennzeichnet, dass** die Fläche rechteckig mit zwei Längsseiten und zwei Breitseiten und einer Längsachse, die sich in der Mitte zwischen den Längsseiten erstreckt, ist und eine der ersten und zweiten Nabe (6) bzw. (7) zu einer Seite der Achse verschoben ist, und die andere der ersten und zweiten Nabe (6) bzw. (7) entweder auf der anderen Seite der Achse angeordnet oder zu dieser anderen Seite verschoben ist.

9. CD-Halter nach einem beliebigen vorhergehenden Anspruch, **dadurch gekennzeichnet, dass** er weiters ein Bodenelement (2) und einen Deckel (3) enthält, der lösbar mit dem Bodenelement (2) in Eingriff gelangt, um die CDs (12, 13) vollständig einzuschließen, wobei die Fläche vom Bodenelement (2) oder vom Deckel (3) definiert ist.

10. CD-Halter nach Anspruch 9, **dadurch gekennzeichnet, dass** der Deckel (3) mit dem Bodenelement (2) scharnierartig verbunden ist.

11. CD-Halter nach Anspruch 9 oder 10, **dadurch gekennzeichnet, dass** der Deckel (3) mit Mitteln zum Halten von Druckmaterial versehen ist.

12. CD-Halter nach Anspruch 9 oder 10, **dadurch gekennzeichnet, dass** der Deckel (3) eine Fläche definiert, die mit zumindest einer CD-Eingriffs-Formation versehen ist.

13. CD-Halter nach Anspruch 12, **dadurch gekennzeichnet, dass** die Fläche dritte und vierte CD-Eingriffs-Formationen trägt, die den ersten und zweiten CD-Eingriffs-Formationen in ihrer Konfiguration bzw. Beabstandung entsprechen.

14. CD-Halter nach einem beliebigen vorhergehenden Anspruch, **dadurch gekennzeichnet, dass** jede CD-Eingriffs-Formation mit dem Bodenelement und/oder Deckel einstückig geformt ist.

15. CD-Halter nach einem beliebigen vorhergehenden Anspruch und mit den Abmessungen einer konventionellen DVD-Kassette.

## Revendications

1. Support pour au moins deux disques compacts (12, 13) ayant chacun une ouverture centrale entourée d'une région annulaire centrale ne portant pas de données, le support comprenant :
une surface ;
des première et deuxième formations d'engagement de disques (12, 13) espacées s'étendant de ladite surface pour supporter les premier et second disques compacts (12, 13), respectivement, dans un aménagement de chevauchement partiel ;
la première formation d'engagement de disque comprenant un premier moyeu (6) qui, en cours d'utilisation, est reçu à l'intérieur de l'ouverture centrale du premier disque (12) ;
la deuxième formation d'engagement de disque comprenant un second moyeu (7) qui, en cours d'utilisation, est reçu à l'intérieur de l'ouverture centrale du second disque (13), et une structure de support adjacente au moyeu qui, en cours d'utilisation, supporte la partie centrale ne portant pas de données du second disque distante de la surface et au-dessus du premier disque, de sorte que les deux disques (12, 13) n'entrent pas en contact l'un avec l'autre dans la région de leur chevauchement ;
**caractérisé en ce que** ladite structure de support a une extension radiale réduite par rapport au centre du second moyeu (7) dans une région opposée au premier moyeu (6), et les premier (6) et second (7) moyeus sont espacés de sorte qu'en cours d'utilisation, le bord d'un disque chevauche une partie de la région centrale ne portant pas de données de l'autre disque, ladite région d'extension radiale réduite de ladite structure de support adaptant la proximité du bord du premier disque (12) au second moyeu (7), et **en ce que** chaque moyeu (6, 7) est muni d'une partie découpée de sorte que le bord de chaque disque (12, 13) puisse s'étendre au-delà de la périphérie de l'ouverture centrale de l'autre disque (12, 13).

2. Support de disque compact selon la revendication 1, **caractérisé en ce que** ladite structure de support est discontinue autour du second moyeu (7), ladite discontinuité formant ladite région d'extension radiale réduite.

3. Support de disque compact selon la revendication 2 précédente, **caractérisé en ce que** ladite structure de support comprend un méplat (17) qui s'étend partiellement autour du second moyeu (7).

4. Support de disque compact selon la revendication 3, **caractérisé en ce que** le méplat (17) est défini par une bosse (9) qui supporte le second moyeu (7).

5. Support de disque compact selon l'une quelconque des revendications précédentes, **caractérisé en ce que** les moyeus (6, 7) sont espacés de sorte que le bord d'un disque (12, 13) soit adjacent à la périphérie de l'ouverture centrale de l'autre disque (12, 13) et vice versa.

6. Support de disque compact selon la revendication 1, **caractérisé en ce que** le premier moyeu (6, 14) est muni d'une formation de support (16) qui, en cours d'utilisation, s'étend à travers l'ouverture du premier disque (12) sensiblement à la même hauteur que ladite structure de support qui, en cours d'utilisation, supporte le bord du second disque (13) au-dessus du premier disque (12).

7. Support de disque compact selon l'une quelconque des revendications précédentes, **caractérisé en ce que** le premier moyeu (6, 14) est entouré par un méplat qui supporte la partie centrale ne portant pas de données du premier disque pour supporter ledit premier disque au-dessus de ladite surface.

8. Support de disque compact selon la revendication 1, **caractérisé en ce que** la surface est rectangulaire avec deux côtés longs et deux côtés courts et un long axe s'étendant à mi-chemin entre lesdits côtés longs, et dans lequel l'un desdits premier (6) et second (7) moyeus est déplacé vers un côté dudit axe et l'autre desdits premier (6) et second (7) moyeus est soit situé sur ledit axe ou est déplacé vers l'autre coté dudit axe.

9. Support de disque compact selon l'une quelconque des revendications précédentes, **caractérisé en ce qu'**il comprend en outre une base (2) et un couvercle (3) qui s'engage de manière détachable sur la base (2) pour enserrer complètement lesdits disques (12, 13), ladite surface étant définie par ladite base (2) ou ledit couvercle (3).

10. Support de disque compact selon la revendication 9, **caractérisé en ce que** ledit couvercle (3) est raccordé de manière articulée à ladite base (2).

11. Support de disque compact selon la revendication 9 ou la revendication 10, **caractérisé en ce que** ledit couvercle (3) est muni de moyens pour retenir un matériau imprimé.

12. Support de disque compact selon la revendication 9 ou la revendication 10, **caractérisé en ce que** ledit couvercle (3) définit une surface munie d'au moins une formation d'engagement d'un disque compact.

13. Support de disque compact selon la revendication 12, **caractérisé en ce que** ladite surface supporte des troisième et quatrième formations d'engagement de disque compact, correspondant en configuration et en espacement auxdites première et deuxième formations d'engagement de disque compact, respectivement.

14. Support de disque compact selon l'une quelconque des revendications précédentes, **caractérisé en ce que** chaque formation d'engagement de disque compact est moulé d'une seule pièce avec la base et/ou le couvercle.

15. Support de disque compact selon l'une quelconque des revendications précédentes et ayant les dimensions d'un boîtier de DVD classique
